# EUROPEAN PATENT APPLICATION

(11) **EP 0 965 627 A1**
(43) Date of publication of application: **22.12.1999**
(21) Application number: 98110959.8
(22) Date of filing: 16.06.1998
(51) Int. Cl.: C09J 177/08, C08G 69/34, C08L 77/00

(54) **Long open time hotmelts based on polyamides**

(71) Applicant: Henkel Kommanditgesellschaft auf Aktien, 40589 Düsseldorf-Holthausen (DE)
(72) Inventor: Rossini, Angela, 20162 Milano (IT); Meda, Francesco, 15040 Lu (AI) (IT)

(57) **Abstract**

The present invention relates to polyamide compositions useful as hot melt-adhesives having a very long open assembly time. A typical composition of the present invention comprises the condensation product of substantially equimolar quantities of an acid component consisting essentially of one or more polymeric fatty acid(s) and one or more dicarboxylic acid(s) and an amine component consisting of one or more aliphatic diamines in which the amine groups are bonded to an even number of carbon atoms on the aliphatic chain equal to or higher than four and one or more organic diamines selected from the group cyclic diamines and/or polyoxyalkylene diamines.

These hotmelt adhesives combine long open assembly time and high tensile strength.

## Description

The present invention relates to polyamide compositions which are usefull as hotmelt adhesives, in particular the invention relates to polyamide compositions having a long open assembly time also referred to as open time. More specifically, the compositions of the present invention are thermoplastic polyamides derived from polymerized fatty acid components.

Hotmelt adhesives are thermoplastic adhesive compositions, which are solid at room temperature. Prior to application of these adhesives, they are heated to become viscous fluids which solidify rapidly on cooling after the assembly of the substrates to be bonded. Hotmelt adhesives have acquired increasing significance in numerous areas of bonding technology. The advantages of hotmelts lay in the fact that they develop the necessary bond strength by cooling from the melt and, accordingly, are suitable for high-speed production processes. Since these adhesives do not contain volatile solvents, there is no need for exhaust equipment and no long drying times are required as for water-based adhesives.

An important property of hotmelt adhesives is their "open time" or ,,open assembly time". Open time, generally speaking, is the amount of time, after the hotmelt adhesive is applied onto a first substrate, that the adhesive is still capable of creating an effective bond to a second substrate. The amount of open time a particular hotmelt demonstrates depends generally on its temperature of application, rate of cooling, rate of crystallization, and the amount of crystallization that will ultimately occur.

The amount of open time desired varies from application to application. Packaging applications generally require fast setting adhesives having a open times of typically 5 - 15 seconds. Assembly of large parts, such as panelling or furniture, generally requires longer open times in order to have enough time to apply the adhesive on large areas, followed by positioning and assembly of the parts. During this assembly, the adhesive layer must remain pliable and tacky to ensure a durable bond. Polyamide hotmelts are generally known as high performance adhesives, however, frequently their quick setting time brings some limitations in their use, especially in the above mentioned applications. There is a strong need for polyamide hotmelt adhesives having long open assembly time combined with a heat resistance of at least 100 °C and sufficiently high mechanical properties.

EP-A-334 667 discloses polyamide hotmelt adhesive compositions having a long open assembly time of at least 45 seconds. These compositions comprise the condensation product of substantially equimolar quantities of an acid component consisting essentially of one or more polymeric fatty acids and one or more dicarboxylic acids and an amine component consisting essentially of one or more cyclic aliphatic diamines, one or more non cyclic aliphatic diamines in which the amine groups are bonded to odd-numbered carbon atoms on the aliphatic chain, whereby the non-cyclic diamine is not 1,3 diaminopropane or 1,3 diaminobutane and a third diamine comprising an alkylene diamine, preferably ethylenediamine. Polyglycol diamines may also be part of the diamine component. Although these compositions are claimed to possess a long open time, some of them show a very low bonding strength, in particular a low tensile strength.

US-A-5672677 discloses a polyamide hotmelt adhesive comprising a polyamide condensation product of substantially equivalent quantities of an acid component consisting of one or more polymeric fatty acids and one or more dicarboxylic acids and an amine component consisting essentially of 2 or more non-cyclic aliphatic diamines and one or more amine-terminated polyglycol diamines. The amine component is substantially free of piperazine-containing polyamines. The preferred non-cyclic aliphatic diamines are ethylenediamine and 1,6-diaminohexane or 1,4-diaminobutane. Preferably, ethylenediamine and the other diamine are present in about equimolar amounts. According to US-A-5672677 it is essential, that the diamine components are composed of non-cyclic aliphatic diamines and polyglycol diamines and are free of piperazine-containing polyamines. These hotmelts fulfil some of the technical requirements, however there is still room for improvement with respect to long open time combined with high tensile strength.

There is a need for polyamide hotmelt adhesives with an effective combination of a long open time, good heat resistance and good adhesion properties.

It has now surprisingly been found, that polyamide adhesive compositions with both long open times and still high heat resistance values together with a high mechanical performance ensuring high bonding strength can be prepared by avoiding ethylenediamine i.e. by replacing it with linear aliphatic diamines containing an even-numbered carbon atom chain with at least 4 carbon atoms.

More specifically, the compositions of the present invention comprise the condensation product of substantially equimolar quantities of
a) an acid component consisting essentially of one or more polymeric fatty acids and one or more dicarboxylic acids and
b) an amine component consisting of
   i) one ore more aliphatic diamines in which the amine groups are bonded to even-numbered carbon atoms on the aliphatic chain with a carbon chain equal or higher than 4 and,
   ii) one or more organic diamines selected from the group of cyclic aliphatic diamines and or polyoxyalkylene diamines.

These polyamide condensation products are solid at room temperature, having a softening point of at least 80 °, preferably above 100 °C. These solid polyamides are either acid terminated or amine terminated.

The softening point is determined by the standard Ring and Ball method according to ASTM E 28.

A significant further increase in open time with a marginal decrease of creep resistance is achieved by combining the above-identified solid polyamides with fluid or semi-solid polyamides (having a softening point of less than 80 °C). It is believed, that the fluid or semi-solid polyamide component acts as an internal plasticizer.

More specifically, the internally plasticized polyamides are a condensation product of a solid polyamide with a fluid or semi-solid polyamide, whereby the fluid or semi-solid polyamide is added in the range of 0 bis 70 % by weight. The fluid or semi-solid polyamide consist of well known condensation products between
a) an acid component consisting essentially of one or more polymeric fatty acids and one or more dicarboxylic acids, and
b) an amine component consisting of one or more cyclic or heterocyclic diamines, polyalkylenediamines, polyamines.

For making these internally plasticized polyamides, the solid polyamide has to be carboxyl-terminated and the fluid or semi-solid polyamide has to be amine-terminated or vice versa.

The reactants employed to prepare the polyamide adhesive compositions of the present invention are well known as are the methods of their preparation. The polymeric fatty acids, sometimes referred to in the literature as "dimer acids", are complex mixtures resulting from the polymerization of fatty acids. Representative of polymeric fatty acids are those commercially available from the polymerization of tall oil fatty acids. These polymeric fatty acids have the following typical composition: C₁₈ monobasic acids (monomer) about 0 to 5 % by weight, C₃₆ dibasic acids (dimer) 60 to 95 % by weight, sometimes up to about 98 % by weight, C₅₄ and higher polybasic acids (trimer) about 1 to 35 % by weight. The relative ratios of monomer, dimer and trimer in the polymeric fatty acids depend on the nature of the starting material, the conditions of polymerization and the degree of purification. Purer grades of dimer polymeric fatty acids are obtained by distillation and contain at least 70 %, preferably 80 % and frequently up to 95 % or even 98 % of dimeric fatty acid. The polymeric fatty acids may be unhydrogenated or hydrogenated.

In addition to the polymeric fatty acids, the acids component may contain C₄ to C₁₂ dicarboxylic acids. Examples of suitable dicarboxylic acids are maleic acid, succinic acid, adipic acid, azelaic acid, sebacic acid, dodecane-dioic acid, glutaric acid, suberic acid, pimelic acid or aromatic dicarboxylic acids, e.g. terephthalic acid or mixtures of these dicarboxylic acids. The carboxylic acid component of the polyamide may contain about 20 to 99 mol % of polymeric fatty acid and about 1 to 80 mol % of at least one C₄-C₁₂ dicarboxylic acid, preferably this mixture contains about 30 to 95 mol % of polymeric fatty acid and about 5 to 70 mol % of the C₄-C₁₂ dicarboxylic acids.

The diamine component consists essentially of
(i) one or more aliphatic diamines with an even number of carbon atoms of at least 4 carbon atoms in the chain, whereby the amino groups are at the terminal ends of the carbon chain. The aliphatic diamines may contain up to 20 carbon atoms and the aliphatic chain may be essentially linear or branched. The most preferred aliphatic diamines with even number of carbon, atoms are 1,4-butane diamine, 1,6-hexamethylene diamine, 1,8-diamino octane or 1,12-diamino dodecane.
(ii) In addition the diamine component must contain one or more organic diamines selected from the group of cyclic diamines, heterocyclic diamines. Examples for cyclic (aliphatic) diamines or heterocyclic diamines are cyclohexanediamine, 4,4'-dicyclohexyl-methane, xylenediamine, piperazine, cyclohexanebis(methylamine), isophorone diamine, dimethylpiperazine and dipiperidylpropane, dimer diamines (amines derived from dimer acids).
(iii) In addition to or in place of the latter cyclic amines it is possible to use one or more polyoxyalkylene-diamines, for example polyoxyethylene diamine, polyoxypropylenediamine or bis-(di-aminopropyl)-polytetrahydrofurane. The polyoxyalkylenediamines, also known as "Jeffamines" (tradename of Huntsman) are most preferred. Typically their molecular weight ranges between 200 and 4.000 preferably between 400 and 2.000.

The amine component comprises preferably 20 to 85 mol % of the even numbered aliphatic diamines and 0 to 70 mol % of the cyclic diamine and 0 to 60 mol % of the polyoxyalkylene diamine, whereby at least one of the cyclic diamine or the polyoxyalkylene diamine is present in the amine component mixture.

The polyamide resins according to the invention may be prepared by conventional condensation methods and the acid components and amine components are present in approximate stoichiometric quantities. In the majority of cases it is preferred that residual acid groups or residual amino groups be present after the condensation. To achieve this, an excess of acid or base of no more than 10 equivalent % of all functional groups is used. Instead of the free carboxylic acids, their corresponding methyl-, ethyl or propyl-ester may be used in the condensation reaction. The melt viscosity of the polyamide-composition may be controlled by adding a small amount of a monofunctional carboxylic acid like stearic acid.

The polyamide compositions according to the present invention have a softening point (determined in accordance with ASTM-E-28) of 60 to 200 °C and preferably of 80 to 170 °C.

The polyamides according to the present invention have a very long open time ranging from about 45 sec. to a few hours. The open time is determined according to ASTM 4497-94. In order to have more a meaningful relation of the open time determined by this ASTM-method to real life application in parts assembly, the open time was determined as follows: The hotmelt adhesive is melt applied to an area of 12.5 x 50 mm of the test specimens. The specimens are assembled and a weight load of 2000 g is applied to the bonding area. The open time is the longest possible time interval between the spreading of the hotmelt adhesive and the completion of assembly of the parts with application of said weight load still resulting in a firm bonding. Even longer open time values may be attained by increasing the assembly pressure.

In spite of the very long open time the polyamide hotmelt adhesives of the present invention have a very high heat resistance, high tensile strength and a high tensile modulus. These properties are of considerable importance for a number of applications. Especially the combination of a long open time and high tensile strength are fundamental assets for applications in the furniture industry, shoe industry cable and electronics industry and, in general, in high performance assembly operations.

A remarkably further increase of open time with only a marginal decrease of the creep resistance can be achieved by combining the above identified solid polyamides, having a softening point above 80 °C with fluid or semi-sold polyamides, having a softening point of less than 80 °C. These can be combined in a condensation reaction, provided that the solid polyamide is carboxyl-terminated and the fluid or semi-solid polyamide is amine-terminated or the solid polyamide is amine-terminated and the fluid or semi-solid polyamide is carboxyl-terminated. It is believed, that the fluid or semi-solid polyamide component acts as an internal plasticizer. The fluid or semi-solid polyamide can be added in the range of 2-70 % by weight. The fluid or semi-solid polyamide consists of well known condensation products between an acid component consisting essentially of one or more polymeric fatty acid and one or more dicarboxylic acid and an amine component consisting of one or more cyclic or heterocyclic diamines, polyalkylenediamines and/or polyamines. It is also possible to use for the fluid or semi-solid polyamide one of the various commercially available products on the market.

The polyamides of the present invention can be prepared by methods known in the art, for example by the general method disclosed in US-A-4912196 examples 1- 3.

The polyamide hotmelt adhesives are applied using conventional hotmelt application procedures such as spraying, printing, dipping, spreading, rolling and the like and the film thickness can range from less than 0,02 mm to up to 2 mm. This hotmeld adhesive may also be used in gap filling aplications. While for most constructions the resin is applied to only one side of the substrate, it may be applied to both sides in order to form a sandwich-type construction. Preferably, the polyamides of the present invention are the sole polymeric ingredient of the hotmelt adhesive, however they may also be blended with other polyamides and/or other polymers such as polyesters, EVA, polyisobutenes, polyolefins and the like to obtain a wide variety of additional compositions useful for hotmelt bonding. They may also contain other conventional additives like tackifiers, antioxidants and other common auxiliaries for hot melt adhesives.

The improved bonding properties of the polyamides of the present invention can be further illustrated by the following examples. It is to be understood that the examples are only to be considered as an illustration of one embodiment of the invention and that modifications throughout may occur to those skilled in the art.

### Examples

### Examples 1 - 14:

The polyamino amide-hotmelt adhesives listed in the following table were made by using a standard polymeric fatty acid of 95 % dimer content. Following the general method disclosed in US-A-4,912,196 examples 1 - 3. The composition of the acid components and amine components are given in equivalent percent. The open time was determined according to ASTM D 4497-94 by spreading the hotmelt adhesive (temperature of the adhesive at the application 220 °C) on an area of 12,5 X 50 mm on Kraft paper. In one set of experiments the weight load of 100 g was used as specified in ASTM 4497. In a second set of experiments a weight load of 2000 g was used in order to evaluate an open time closer to the pressure used in real hotmelt applications.

The heat resistance was measured according to ASTM D 4498 using a load of 0,208 kg/cm².
The softening point is determined by the standard Ring and Boll method according to ASTM E 28.
The viscosity was measured at the specified temperatures according to ASTM D 3236.

Tensile yield (tensile strength), elongation and tensile modules were determined according to ASTM D 638.

It is apparent that the hotmelt adhesives of the present invention exhibit very long open time between 180 seconds and 3000 seconds at 2000 g weight load. In spite of this, they exhibit very good heat resistance and high tensile strength.

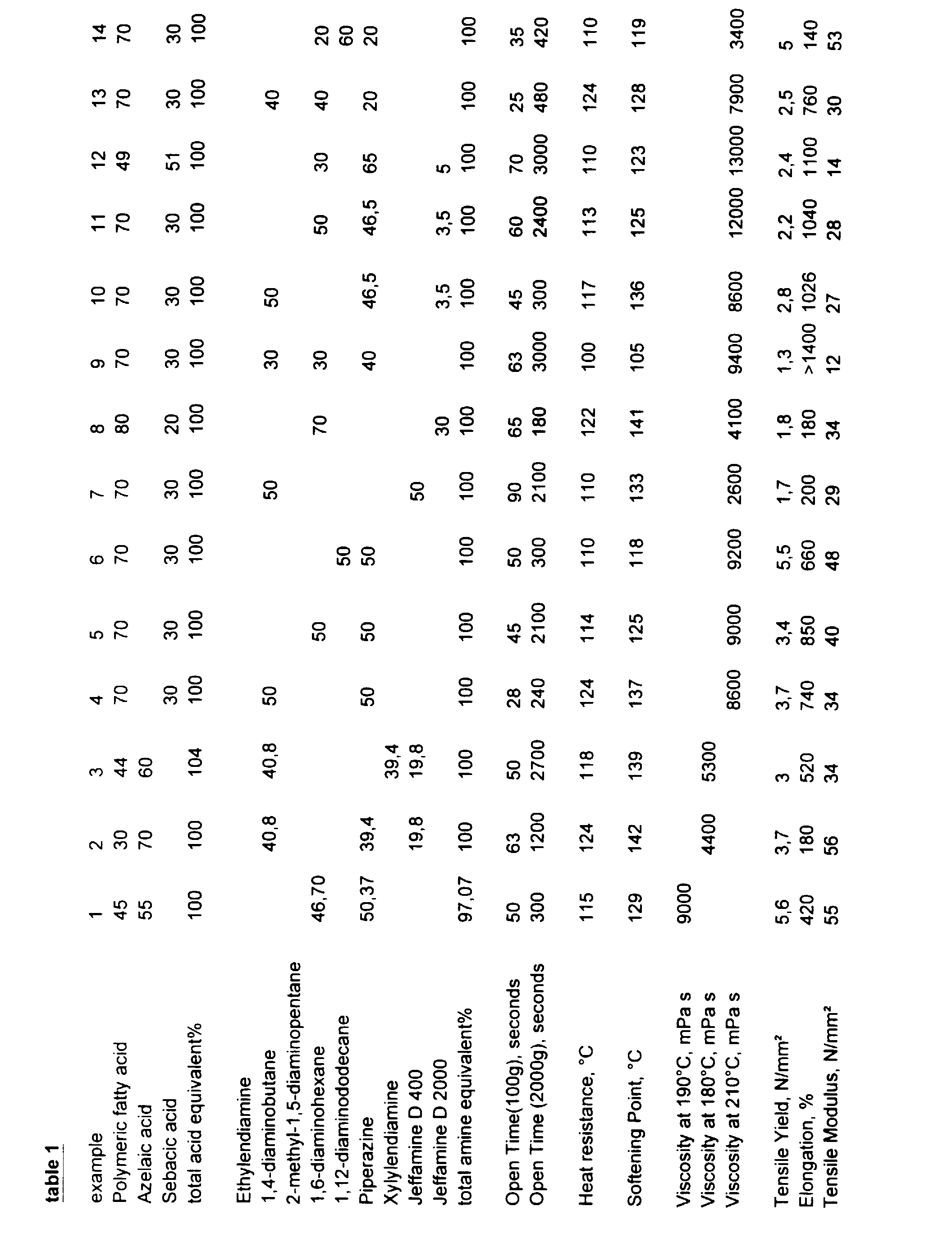

### Comparative examples 15 - 20:

Similar to examples 1 - 14, the polyamide-compositions listed in table 2 were made.
Comparative example 15 corresponds to example 9 disclosed in EP 0 334 667.
Comparative example 16 is equivalent to example 2 disclosed in US-A-5,672,677.
By comparing example 1 with comparative example 15 or examples 2 and 3 with comparative example 16 it is apparent that the hotmelt adhesives of the present invention have significantly longer open time than both of the state of the art adhesives without sacrificing on the high tensile strength and high heat resistance.

By comparing comparative example 17 with the inventive examples 4, 5 or 6 it can be clearly seen that replacing ethylene diamine with higher even number alkyl diamines, the open time is significantly longer without sacrificing on the tensile strength.

Similar results are obtained by comparing comparative example 18 with inventive example 7 and 8 or comparative example 19 with inventive example 9 or comparative example 20 with inventive examples 10 to 12.

**table 2**

| comparative example | 15 | 16 | 17 | 18 | 19 | 20 |
|---|---|---|---|---|---|---|
| Polymeric fatty acid | 35 | 58,1 | 80 | 90 | 70 | 85 |
| Azelaic acid | 65 | 45,9 | | | | |
| Sebacic acid | | | 20 | 10 | 30 | 15 |
| total acid equivalent% | 100 | 104 | 100 | 100 | 100 | 100 |
| | | | | | | |
| Ethylendiamine | 21,51 | 39,4 | 50 | 70 | 30 | 50 |
| 1,4-diaminobutane | | 40,8 | | | 30 | |
| 2-methyl-1,5-diaminopentane | 25,19 | | | | | |
| 1,6-diaminohexane | | | | | | |
| 1,12-diaminododecane | | | | | | |
| Piperazine | 50,37 | | 50 | | 40 | 46,5 |
| Xylylendiamine | | | | | | |
| Jeffamine D 400 | | 19,8 | | | | |
| Jeffamine D 2000 | | | | 30 | | 3,5 |
| total amine equivalent% | 97,07 | 100 | 100 | 100 | 100 | 100 |
| | | | | | | |
| Open Time(100g), seconds | 20 | 45 | 13 | 20 | 33 | 20 |
| Open Time (2000g), seconds | 120 | 270 | 20 | 30 | 180 | 35 |
| | | | | | | |
| Heat resistance, °C | 115 | 130 | 124 | 106 | 97 | 109 |
| | | | | | | |
| Softening Point, °C | 132 | 145 | 147 | 127 | 110 | 129 |
| | | | | | | |
| Viscosity at 190°C, mPa s | 11500 | | | | | |
| Viscosity at 180°C, mPa s | | 5000 | | | | |
| Viscosity at 210°C, mPa s | | | 8900 | 1800 | 6800 | 8000 |
| | | | | | | |
| Tensile Yield, N/mm² | 5 | 3,4 | 4,3 | 1,5 | 3 | 3 |
| Elongation, % | 560 | 590 | 773 | 200 | 1000 | 1060 |
| Tensile Modulus, N/mm² | 16 | 53 | 46 | 31 | 22 | 34 |

## Claims

1. A polyamide hot melt adhesive composition having a long open time of at least 45 seconds comprising the condensation product of
(a) a mixture of carboxylic acids consisting essentially of at least one polymeric fatty acid and one or more aliphatic and/or aromatic dicarboxylic acids and
(b) a diamine component consisting essentially of
(i) one or more aliphatic diamines with an even number of carbon atoms equal to or greater than 4 whereby the amino groups are at the terminal ends of the carbon chain and at least one of
(ii) one or more cycloaliphatic or heterocyclic diamines
(iii) one or more polyoxyalkylene-diamines
whereby the condensation product has a softening point of greater than 80°C.

2. The polyamide hotmelt adhesive of claim 1 wherein said carboxylic acid component (a) comprises
20 to 99 mole % of polymeric fatty acid and
1 to 80 mole % of at least one aliphatic and/or aromatic C₄-C₁₂ dicarboxylic acid, and preferably 30 to 95 mole % of polymeric fatty acid and
5 to 70 mole % of C₄-C₁₂ dicarboxylic acid

3. The polyamide hotmelt adhesive of any of the preceding claims wherein said amine component (b) comprises
20 to 85 mole % of aliphatic diamines (i),
0 to 70 Mole % of cycloaliphatic diamines (ii) and
0 to 60 mole % of polyoxyalkylene diamines (iii)

4. The polyamide hotmelt adhesive of any of the preceding claims wherein the dicarboxylic acid is selected from azelaic acid, sebacic acid, dodecane-dioic acid or adipic acid, glutaric acid, maleic acid, succinic acid, suberic acid, pimelic acid or terephthalic acid.

5. A hotmelt adhesive composition comprising an acid terminated condensation product of 98 to 30 % by weight of a polyamide of any of the preceding claims with 2 to 70 % by weight of a fluid or semisolid (softening point below 80 °C) amine terminated polyamide.

6. A hotmelt adhesive composition comprising an amine terminated condensation product of 98 to 30 % by weight of a polyamide of any of the claims 1 to 4 with 2 to 70 % by weight of a fluid or semisolid (softening point below 80 °C) acid terminated polyamide.

7. A process of bonding materials comprising the steps of
- melt applying the hot melt adhesive composition as claimed in any of the preceding claims to at least one substrate to be bonded by spraying, printing, dipping, spreading or rolling,
- joining the substrates to be bonded,
- optionally applying pressure and
- allowing the bond line to cool to ambient temperature.
